# EUROPEAN PATENT APPLICATION

(11) **EP 0 915 243 A2**
(43) Date of publication of application: **12.05.1999**
(21) Application number: 98120871.3
(22) Date of filing: 03.11.1998
(51) Int. Cl.: F02D 21/08, F02D 41/22

(54) **Flow control valve system and method**

(30) Priority: 04.11.1997 JP 302063/97
(71) Applicant: TOYOTA JIDOSHA KABUSHIKI KAISHA, Aichi-ken 471-8571 (JP)
(72) Inventor: Iwai, Akira c/o Toyota Jidosha Kabushiki Kaisha, Toyota-shi, Aichi-ken, 471-8571 (JP)
(74) Representative: Pellmann, Hans-Bernd, Dipl.-Ing.

(57) **Abstract**

A flow control valve system precisely diagnoses the condition of a flow control valve and reflects the diagnosis in linear control, thereby achieving high reliability. An electronic control unit (ECU) executes an abnormality diagnostic operation regarding an exhaust gas recirculation (EGR) valve when exhaust gas recirculation is being performed and the EGR flow is in a steady condition. For an abnormality diagnostic, the ECU first calculates an amount of control (amount of negative pressure) needed for the EGR valve to start an operation in a manner opposite to the manner of the previous operation, and sets the control amount as a function of an amount of hysteresis between the start of opening and the start of closing of the EGR. If there is an increase in the calculated amount of hysteresis, the ECU determines that the EGR valve has an operation abnormality due to deterioration of the valve or the like. In accordance with the degree or extent of the abnormality, the ECU selectively performs an operation, that is, corrects the amount of control or stops the exhaust gas recirculation.

## Description

### INCORPORATION BY REFERENCE

The disclosure of Japanese Patent Application No. HEI 9-302063 filed on November 4, 1997 including the specification, drawings and abstract is incorporated herein by reference in its entirety.

### BACKGROUND OF THE INVENTION

### 1. Field of the Invention

The present invention relates to a flow control valve system provided in a fluid passage for controlling the flow therethrough, for example, an exhaust gas recirculation flow control valve in an internal combustion engine, or the like. More particularly, the invention relates to an improvement in a system and method for performing a diagnostic function of detecting the presence of an abnormality in a flow control valve and therefore achieves highly reliable flow control.

### 2. Description of the Related Art

Exhaust gas recirculation control apparatuses (hereinafter, referred to as "EGR control apparatuses") have been used to reduce the amounts of harmful substances in exhaust gas from internal combustion engines. In EGR control apparatuses, an appropriate proportion of exhaust gas is returned to an intake system. An EGR controller apparatus has an EGR passage for communication between an intake passage and an exhaust passage, an EGR valve (exhaust gas recirculation flow control valve) provided in the EGR passage for adjusting the recirculation flow rate of exhaust gas, and the like. The EGR valve is typically formed by a diaphragm valve that is opened and closed by operation of a vacuum pump, that is, adjustment of negative pressure.

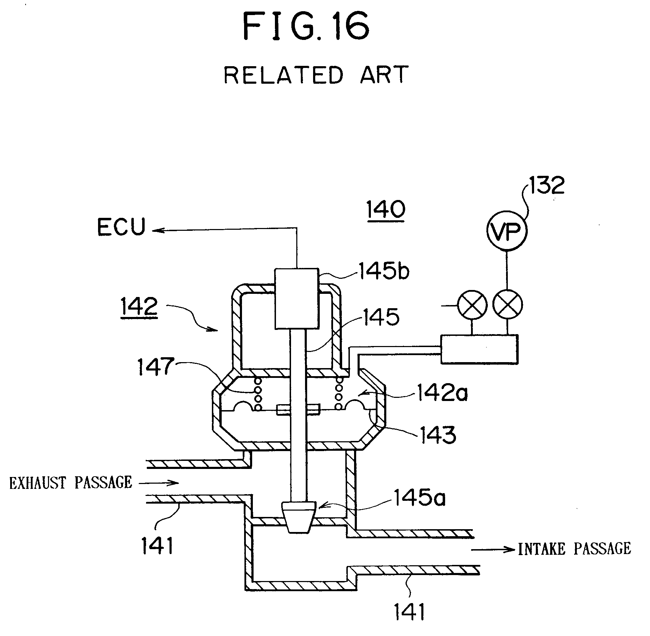

Fig. 16 shows an example of an EGR control apparatus equipped with a diaphragm-type EGR valve. An EGR valve 142 is provided in an EGR passage 141. The EGR valve 142 has in its interior a diaphragm 143 bendable in accordance with a differential pressure across the diaphragm 143. A valve body 145 is firmly connected to a central portion of the diaphragm 143. As the valve body 145 is moved up and down together with the diaphragm 143 as a unit, a valve portion 145a formed at a distal (lower) end of the valve body 145 is switched between an open state and a closed state to regulate the exhaust gas recirculation flow. More specifically, when a negative pressure equal to or greater than a predetermined negative pressure is established in a space 142a through operation of a vacuum pump 132, the diaphragm 143 is bent upward, lifting the valve body 145, so that the valve portion 145a assumes the open state. When the negative pressure in the space 142a is less than the predetermined pressure, the diaphragm 143 is bent downward by a force from a spring 147, pushing the valve body 145 down, so that the valve portion 145a assumes the closed state. A potentiometer-type position sensor (lift sensor) 145b is provided near an upper end of the valve body 145, for detecting the amount of lift of the valve body 145, that is, the amount of opening of the valve portion 145a.

By introducing a portion of exhaust gas using the EGR control apparatus 140, the maximum combustion temperature in each combustion chamber is reduced, thereby reducing generation of harmful nitrogen oxides (hereinafter, referred to as "NOx"). However, an excessive amount of exhaust gas recirculated may cause drawbacks, such as an output power reduction, degradation of combustion stability, increase in HC emission, and the like. Therefore, for the operation of an EGR valve, it has become more favorable to employ a linear valve opening control method wherein a degree of opening of the valve is continuously changed in accordance with time-varying engine operating conditions, rather than a valve on/off control method wherein either the fully open state or the completely closed state is selected. As a result, it is necessary to quickly detect any abnormality in operation of the EGR valve which makes it difficult to perform precision open/close control of the EGR valve.

In an internal combustion engine exhaust gas recirculation flow control method described in Japanese Patent Application Laid-Open No. HEI 4-103865 and the like, if the desired control of an EGR valve fails to correspond exactly to the actual valve opening due to deposit of carbon or the like from exhaust gas onto the valve seat of the EGR valve it is determined that the EGR valve has an abnormality only when the deviation between the desired control of the EGR valve and the actual valve opening is greater than or equal to a predetermined value in accordance with the engine operating conditions. In another control method also described in the laid-open patent application, the criterion (predetermined pressure) for determining whether an abnormality has occurred is changed in accordance with a decision as to whether the engine operating condition is a steady condition or a transitional condition, so as to improve the precision of the valve abnormality determination.

Since the deviation between the desired control of the EGR valve and the actual amount of operation thereof tends to gradually increase due to deterioration of the EGR valve, fouling inside the valve, and the like, a deterioration in responsiveness or the following or tracing characteristic gradually accelerates. If the responsiveness or the following characteristic of the EGR valve has deteriorated, the motion of the EGR valve can sometimes become very difficult, particularly when the EGR valve is operated in the opening or closing direction from a certain opening that has been maintained, that is, at the time of a shift from a steady state to a transitional state of the EGR valve. This fixation problem is one of the most significant problems in realization of fine and precise valve open/close control. However, the method described in the aforementioned laid-open patent application does not consider such valve fixation occurring at the time of shift from the steady state to the transitional state of the valve. Therefore, the control performance or the abnormality determination precision achieved by the above-described method is limited.

The circumstances stated above are not limited to the EGR control apparatuses, but substantially common to most apparatuses wherein the opening of a flow control valve provided in a fluid passage is linearly adjusted and controlled.

### SUMMARY OF THE INVENTION

Accordingly, it is an object of the present invention to provide a flow control valve system that achieves flow control with an improved reliability by precisely diagnosing the condition of a flow control valve and reflecting the diagnosis in linear control.

According to one aspect of the invention, there is provided a flow control valve system including a flow control valve provided in a fluid passage, a control device for controlling an opening of the flow control valve so that a flow of fluid through the fluid passage becomes a target value, a control detection device for detecting, while the opening of the flow control valve is in a steady state, an amount of control needed for the flow control valve to actually operate after output of an operation instruction from the control device to the flow control valve, and a diagnostic device for determining whether the flow control valve has an abnormality, by comparing the amount of control detected by the control amount detection device with a predetermined reference value.

Therefore, the flow control valve system is able to determine whether there is an abnormality that impedes the fine and precise open/close control of the flow control valve, on the basis of a response delay at the time of a shift from a steady flow condition to a transitional flow condition, that is, a response delay at the time of a start of operation of the flow control valve.

In the flow control valve system, the flow control valve may have a hysteresis between an opening operation and a closing operation thereof, and the control amount detection device may detect the amount of control needed until the flow control valve actually operates, as a value that involves the hysteresis of the flow control valve as a factor.

This optional construction further improves the reliability and precision in the abnormality diagnostic of the flow control valve, by detecting hysteresis that occurs in a manner variable depending on the history of opening/closing operations of the flow control valve.

The flow control valve system may further include a correction device for correcting, when it is determined by the diagnostic device that the flow control valve has an abnormality, the amount of control provided by the control device.

The correction device enables more accurate abnormality detection regarding the flow control valve. If an abnormality occurs in the flow control valve, the amount of control is corrected precisely in accordance with the abnormality, so that suitable flow control by the control valve can be maintained.

Another aspect of the invention provides a method for controlling a flow control valve. In the method, a flow control valve is provided in a fluid passage. An opening of the flow control valve is controlled so that a flow of fluid through the fluid passage becomes a target value. While the opening of the flow control valve is in a steady state, an amount of control needed for the flow control valve to actually operate after receiving an operation instruction is detected. By comparing the amount of control detected by the control amount detection device with a predetermined reference value, it is determined whether the flow control valve has an abnormality.

### BRIEF DESCRIPTION OF THE DRAWINGS

The foregoing and further objects, features and advantages of the present invention will become apparent from the following description of preferred embodiments with reference to the accompanying drawings, wherein like numerals are used to represent like elements and wherein:
Fig. 1 is a schematic illustration of a vehicular diesel engine system equipped with an EGR control apparatus according to a first embodiment;
Fig. 2 is a block diagram of an electrical arrangement of the EGR control apparatus of the first embodiment;
Fig. 3 shows a flowchart of an EGR valve drive control procedure according to the first embodiment;
Figs. 4 and 5 show a flowchart of an EGR valve diagnostic procedure according to the first embodiment;
Fig. 6 is a graph indicating hysteresis between the start of opening and the start of closing of an EGR valve, in relation to the relationship between the amount of control and the amount of operation of the EGR valve;
Fig. 7 shows a flowchart of an EGR valve drive control procedure according to a second embodiment;
Figs. 8 and 9 show a flowchart of an EGR valve diagnostic procedure according to the second embodiment;
Fig. 10 shows a flowchart of an EGR valve drive control procedure according to a third embodiment;
Figs. 11 and 12 show a flowchart of an EGR valve diagnostic procedure according to the third embodiment;
Fig. 13 is a graph indicating abnormality determination regions in relation to increases in the hysteresis of the start of opening and the start of closing of the EGR valve;
Figs. 14A and 14B are graphs indicating target EGR rate regions determined on the basis of the relationship between the engine revolution speed and the amount of fuel injected;
Figs. 15A and 15B are time charts indicating an example of the manner of correction in feedback control of the recirculating flow of exhaust gas; and
Fig. 16 is a schematic illustration of an example of a diaphragm-type EGR control valve.

### DETAILED DESCRIPTION OF PREFERRED EMBODIMENTS

Preferred embodiments of the present invention will be described in detail hereinafter with reference to the accompanying drawings.

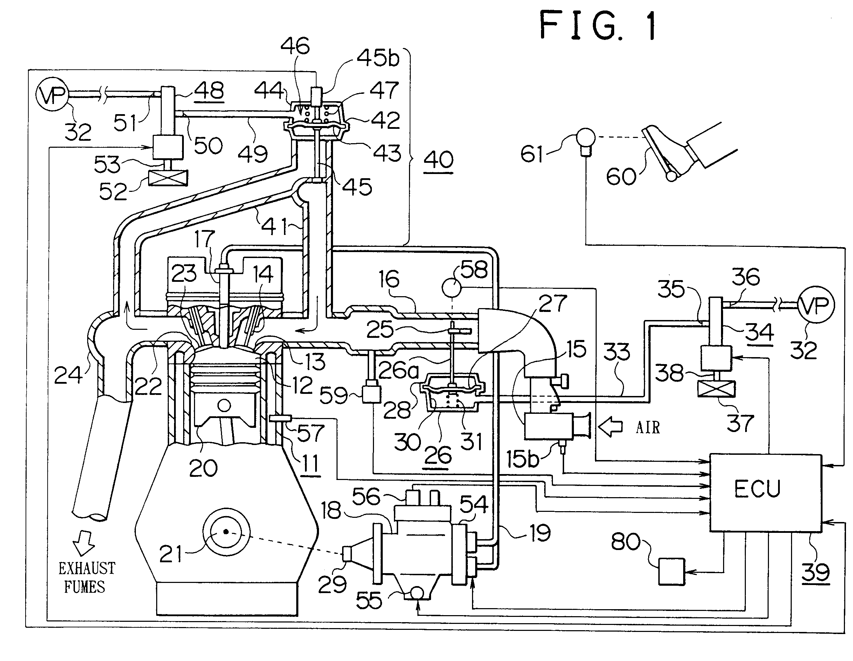

A first embodiment wherein the flow control valve system of the invention is applied to a vehicular electronically controlled diesel engine system will be described with reference to Figs. 1 through 6.

Fig. 1 is a schematic illustration of an electronically controlled diesel engine of a vehicle having an EGR control apparatus according to the first embodiment. A diesel engine (hereinafter, simply referred to as "engine") 11 has a plurality of cylinders each of which partially defines a combustion chamber 12. Each cylinder is provided with a fuel injection nozzle 17 for injecting fuel pumped from a fuel injection pump 18, via a fuel line 19, into the combustion chamber 12.

During the intake stroke in each cylinder of the engine 11, an intake port 13 provided for the cylinder is opened by an intake valve 14. As the piston 20 in the combustion chamber 12 moves down, external air introduced into an intake passage 16 through an air cleaner 15 (that is, intake air) flows into the combustion chamber 12 of the cylinder. During the subsequent compression stroke, the intake valve 14 is closed, and the intake air in the combustion chamber 12 is pressurized by an upward movement of the piston 20, so that the temperature and pressure thereof increase. Then, fuel is injected from the fuel injection nozzle 17, so that fuel explodes by self ignition, thereby entering the explosion stroke. By the combustion/explosion, the piston 20 is forced down to rotate a crank shaft 21, thereby producing a drive force of the engine 11. During the exhaust stroke, an exhaust port 12 provided for the cylinder is opened by an exhaust valve 23, so that exhaust gas is led out from the combustion chamber 12 into an exhaust passage 24, and then discharged to the outside.

An intake throttle valve 25 provided in the intake passage 16 is operated by an actuator 26 to adjust the air flow through the intake passage 16 in accordance with the operating condition of the engine 11. The actuator 26 is provided with a housing 28 containing a diaphragm 27, and a rod 26a fixed to the diaphragm 27. The rod 26a is linked to the intake throttle valve 25. In the actuator 26, a pressure chamber 30 is defined by the diaphragm 27 and the housing 28. A spring 31 is provided in the pressure chamber 30 so as to urge the diaphragm 27 and the rod 26a in one direction.

A first electric vacuum regulating valve (hereinafter, referred to as "EVR valve") 34 is provided in a negative pressure passage 33 which connects the pressure chamber 30 to a vacuum pump 32. The first EVR valve 34 is formed by a three-way electromagnetic valve that is operated by an electric signal. The first EVR valve 34 is provided with an output port 35 communicating with the pressure chamber 30 through the negative pressure passage 33, a negative pressure port 36 connected to the vacuum pump 32, and an atmospheric port 38 for introducing an atmospheric pressure via a filter 37. The filter 37 prevents dust, muddy water and the like from entering the first EVR valve 34 through the atmospheric port 38. When the first EVR valve 34 is electrified, the negative pressure produced by the vacuum pump 32 is introduced into the pressure chamber 30. When the electrification of the first EVR valve 34 is stopped, the atmospheric pressure is introduced into the pressure chamber 30.

An electronic control unit (hereinafter, referred to as "ECU") 39, described later, regulates the pressure introduced into the pressure chamber 30, by controlling the electrification of the first EVR valve 34 based on duty signals.

For example, the ECU 39 controls the electrification of the first EVR valve 34 at a duty ratio of 100% to fluidly connect the output port 35 and the negative pressure port 36 with each other so as to introduce a negative pressure into the pressure chamber 30. Through this operation, the diaphragm 27 is displaced downward, together with the rod 26a, against the force form the spring 31, so that the intake throttle valve 25 is operated to reduce the effective flow passage sectional area of the intake passage 16. Therefore, the flow of air to be supplied from the intake passage 16 into the combustion chamber 12 is stopped.

Furthermore, the ECU 39 stops electrification of the first EVR valve 34 (a duty ratio of 0%) to fluidly connect the output port 35 and the atmospheric port 38 with each other so as to introduce the atmospheric pressure into the pressure chamber 30. Through this operation, the diaphragm 27 is displaced upward together with the rod 26a, by the force of the spring 31 (to a position as indicated in Fig. 1), so that the intake throttle valve 25 is operated to increase the effective flow passage sectional area of the intake passage 16. Therefore, the flow rate of air supplied into the combustion chamber 12 through the intake passage 16 (intake air amount) increases. Thus, the ECU 39 variably controls the electrification of the first EVR valve 34 at duty ratios of 0-100% so that the magnitude of the negative pressure introduced into the pressure chamber 30 is adjusted, for example, in a linear manner. Therefore, it becomes possible to continuously adjust the intake air amount to an amount according to the operating condition of the engine 11, by adjusting the opening of the intake throttle valve 25.

An EGR apparatus 40 returns a portion of the exhaust gas discharged from each combustion chamber 12 into the exhaust passage 24, to the intake passage 16 (recirculation). The EGR apparatus 40 has an EGR passage 41 for returning a portion of exhaust gas from the exhaust passage 24 into the intake passage 16, and an EGR valve (exhaust gas recirculation regulator valve) 42 operable to regulate the flow of exhaust gas recirculation (EGR amount) through the EGR passage 41.

The EGR valve 42 is formed by a diaphragm-type valve that opens and closes the EGR passage 41 using a negative pressure and an atmospheric pressure as operating pressures. The EGR valve 42 is provided with a housing 44 containing a diaphragm 43, and a valve body 45 fixed to the diaphragm 43. In the EGR valve 42, a pressure chamber 46 is defined by the diaphragm 43 and the housing 44. A spring 47 is provided in the pressure chamber 46 so as to urge the diaphragm 43 and the valve body 45 in one direction. The EGR apparatus 40 has a second EVR valve 48 for adjusting the negative pressure and the atmospheric pressure introduced into the pressure chamber 46.

The second EVR valve 48 is also formed by a three-way electromagnetic valve that is operated by an electric signal. The second EVR valve 48 introduces the atmospheric pressure when electrified, and it introduces the negative pressure from the vacuum pump 32 into the pressure chamber 46 when not electrified. The second EVR valve 48 is provided with an output port 50 communicating with the pressure chamber 46 through a negative pressure passage 49, a negative pressure port 51 connected to the vacuum pump 32, and an atmospheric port 53 for introducing an atmospheric pressure via a filter 52. The filter 52 prevents dust, muddy water and the like from, entering the second EVR valve 48 through the atmospheric port 53.

The ECU 39 controls the electrification of the second EVR valve 48 at a predetermined duty ratio to fluidly connect the output port 50 and the negative pressure port 51 with each other so as to introduce a negative pressure into the pressure chamber 46. Through this operation, the diaphragm 43 is displaced upward together with the valve body 45, against the force from the spring 47, so that the EGR valve 42 becomes fully open. Therefore, a portion of the exhaust gas flow through the exhaust passage 24 is returned to each combustion chamber 12, via the EGR passage 41 and the intake passage 16. The exhaust gas recirculation (EGR) is thus performed.

Furthermore, the ECU 39 stops electrification of the second EVR valve 48 (a duty ratio of 0%), to fluidly connect the output port 50 and the atmospheric port 53 with each other so as to introduce the atmospheric pressure into the pressure chamber 46. Through this operation, the diaphragm 43 is displaced downward together with the valve body 45, by the force of the spring 47, so that the EGR valve 42 becomes completely closed. Therefore, the flow of exhaust gas through the EGR passage 41 is shut down, thereby stopping the performance of the EGR. The ECU 39 variably controls the electrification of the second EVR valve 48 at duty ratios of 0-100% so that the magnitude of the negative pressure introduced into the pressure chamber 46 is adjusted, for example, in a linear manner. Therefore, it becomes possible to continuously adjust the EGR amount in accordance with the operating conditions of the engine 11, by adjusting the opening of the EGR valve 42.

The distribution-type fuel injection pump 18 pumps fuel to be burned in each combustion chamber 12, to each fuel injection nozzle 17 through the fuel line 19, as well known. The fuel injection pump 18 pressurizes fuel from a fuel tank (not shown) to a high pressure, and ejects a predetermined amount of pressurized fuel toward each fuel injection nozzle 17 at a respective predetermined timing. Each fuel injection nozzle 17 operates on the basis of the pressure of fuel delivered thereto, so as to inject fuel into the corresponding combustion chamber 12. An electronic spill valve 54 contained in the fuel injection pump 18 adjusts the amount of fuel ejected from the fuel injection pump 18 during each performance of fuel ejection, that is, the amount of fuel injection from each fuel injection nozzle 17. A timer device 55 contained in the fuel injection pump 18 adjusts the time to start fuel ejection from the fuel injection pump 18, that is, the timing of fuel injection from each fuel injection nozzle 17. The ECU 39 electrically controls the electromagnetic spill valve 54 and the timer device 55.

The crank shaft 21, which is the output shaft of the engine 11, is connected to a drive shaft 29 of the fuel injection pump 18 to rotate the drive shaft 29. Thus, the fuel injection pump 18 is driven in cooperation with the engine 11. A rotational speed sensor 56 disposed in the fuel injection pump 18 detects the rotational speed of the drive shaft 29, thereby detecting the rotational speed of the crank shaft 21, that is, the engine revolution speed NE.

A water temperature sensor 57, provided in the engine 11, detects the temperature of cooling water (cooling water temperature) that cools the engine 11, and outputs a signal in accordance with the detected temperature. An intake throttle valve sensor 58, provided near the intake throttle valve 25, detects the opening of the intake throttle valve 25 and outputs a signal in accordance with the opening of thereof.

An intake pressure sensor 59, provided in the intake passage 16, detects the intake air pressure PM in the intake passage 16 and outputs a signal in accordance with the detected pressure. An accelerator sensor 61, provided near an accelerator pedal 60, detects the amount of depression of the accelerator pedal 60.

An intake temperature sensor 15b is provided in the air cleaner 15, which is disposed near the inlet of the intake passage 16 for cleaning intake air. The intake temperature sensor 15b detects the temperature of air introduced into the intake passage 16, that is, the intake temperature THA, and outputs a signal in accordance with the detected temperature.

A lift sensor 45b, provided in the EGR valve 42, detects the lift (that is, the degree of opening of the EGR valve) LEGR of the valve body 45 that opens and closes the EGR valve 42, and outputs a signal in accordance with the lift LEGR.

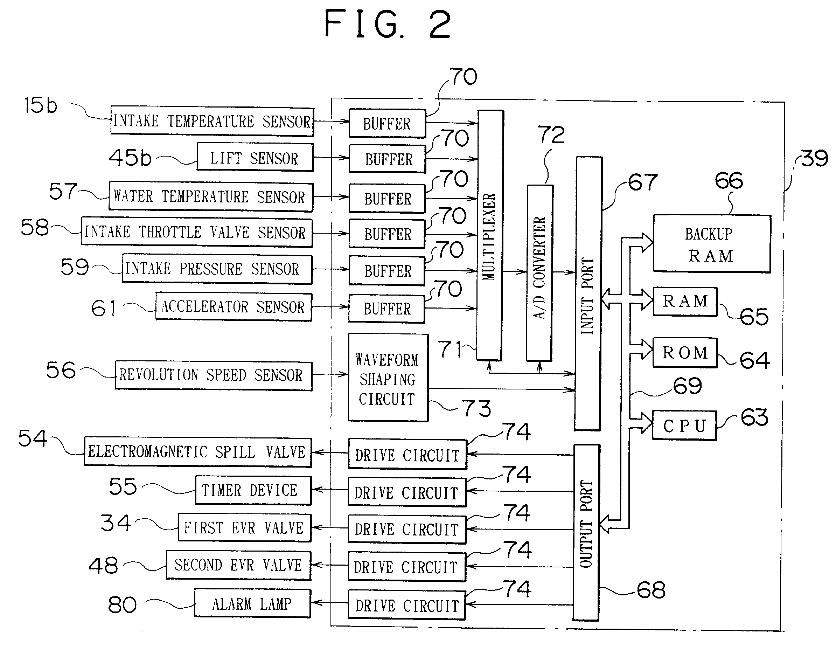

An alarm lamp 80 (see Fig. 2) is turned on in accordance with an instruction signal from the ECU 39, to inform a driver of an abnormality of the engine 11 or the like.

The ECU 39 accepts signals from the various sensors 15b, 45b, 56-59, 61 and the like. Based on these input signals, the ECU 39 separately controls the electromagnetic spill valve 54, the timer device 55, the first EVR valve 34 and the second EVR valve 48. Moreover, if an abnormality occurs in a component of the engine system, the ECU 39 detects the abnormality based on the signals from the sensors 15b, 45b, 56-59, 61 and the like, and turns on the alarm lamp 80.

As illustrated in the block diagram of Fig. 2, the ECU 39 has a central processing unit (CPU) 63, a read-only memory (ROM) 64 in which predetermined control programs, function data and the like are pre-stored, a random access memory (RAM) 65 for temporarily storing results of operations by the CPU 63, and a backup RAM 66 that is preferably a battery-backed-up non-volatile RAM. These components 63-66 are connected to an input port 67 and an output port 68 by busses 69.

The intake temperature sensor 15b, the lift sensor 45b, the intake throttle valve sensor 58, the accelerator sensor 61, the intake pressure sensor 59 and the water temperature sensor 57 are connected to the input port 67, via respective buffers 70, a multiplexer 71 and an A/D converter 72. The rotational speed sensor 56 is connected to the input port 67, via a waveform shaping circuit 73 that binarizes the signal from the rotational speed sensor 56. The CPU 63 reads the detection signals from the sensors 15b, 45b, 56-59 and 61, via the input port 67.

The electromagnetic spill valve 54, the timer device 55, the first and second EVR valves 34, 48 and the alarm lamp 80 are connected to the output port 68, via respective drive circuits 74. Based on the input values from the sensors 15b, 45b, 56-59 and 61, the ECU 39 executes the fuel injection control, the drive control of the EGR valve 42 (EGR control), abnormality diagnostics and the like.

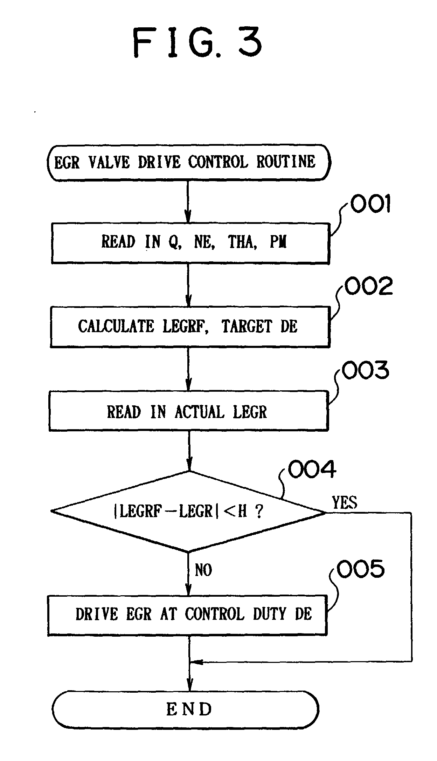

Among the various control programs, the program for performing the drive control of the EGR valve 42 will be described with the flowchart of Fig. 3. By this program, a control duty DE for driving the EGR valve 42 in the opening or closing direction is determined.

The flowchart of Fig. 3 illustrates an EGR valve drive control routine that is executed by the ECU 39 as a periodical interrupt at a predetermined time interval.

When this routine is started, the ECU 39, in step 001, reads an engine revolution speed NE, an intake temperature THA and an intake pressure PM calculated from detection values from the rotational speed sensor 56, the intake temperature sensor 15b and the intake pressure sensor 59, respectively, and also reads a latest value of the fuel injection amount Q that is updated at predetermined time intervals in a separate routine. Subsequently in step 002, the ECU 39 calculates a target EGR valve opening LEGRF on the basis of the engine revolution speed NE and the fuel injection amount Q inputted in step 001, with reference to a predetermined map (not shown). Furthermore, the ECU 39 calculates a control duty, as a target DE, corresponding to the target EGR valve opening LEGRF.

Subsequently, ECU 39 proceeds to step 003.

In step 003, the ECU 39 reads an actual EGR valve opening LEGR based on a detection value from the lift sensor 45b. Then, the ECU 39 proceeds to step 004.

In step 004, the ECU 39 determines whether the deviation of the actual EGR valve opening LEGR from the target EGR valve opening LEGRF, that is, |LEGRF - LEGR|, is less than a predetermined value H (where H is a positive value) . If the determination is negative, operation proceeds to step 005. If the determination is affirmative, the ECU 39 temporarily ends this routine. More specifically, if the determination in step 004 is affirmative, it is considered that the target opening LEGRF of the EGR valve 42 calculated with reference to the operating condition substantially equalizes the present actual EGR valve opening LEGR, so that the opening of the EGR valve 42 will not be changed.

In step 005, the ECU 39 executes the drive control of the EGR valve 42 in accordance with the control duty (target DE) calculated in step 002. Then, the ECU 39 temporarily ends this routine.

Next, a program for performing abnormality diagnostic of the EGR valve 42 will be described.

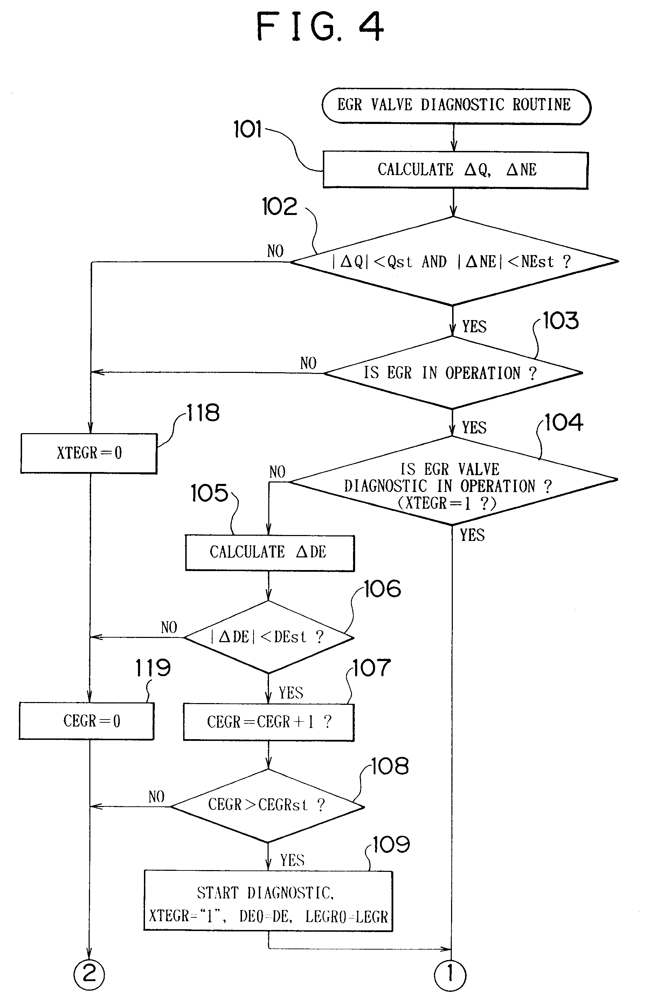

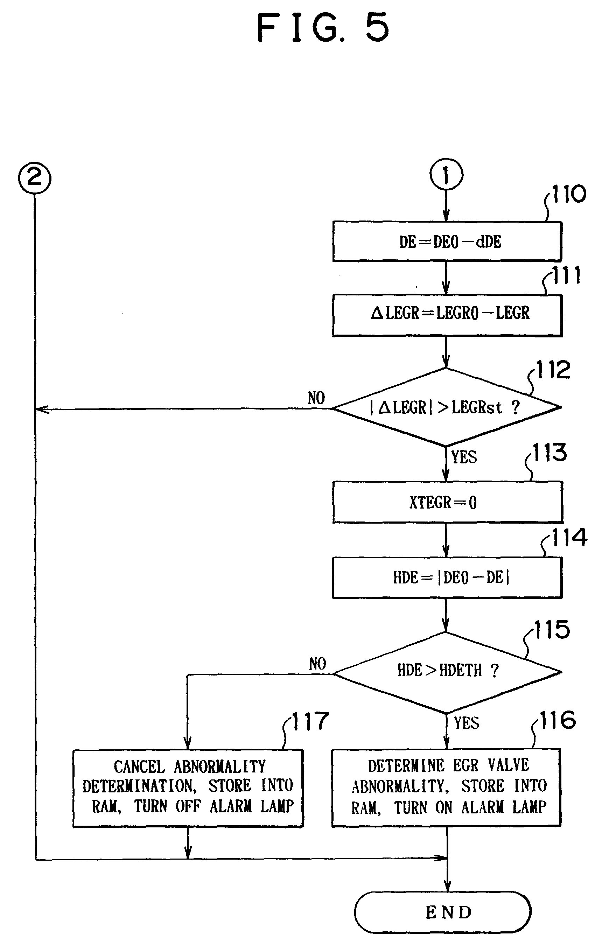

Figs. 4 and 5 show a flowchart illustrating an EGR valve diagnostic routine executed by the ECU 39. In this routine, when a state shift is necessary from a steady state where the EGR valve 42 maintains its opening at a constant level to a transitional state where the EGR valve 42 is being operated in the closing or opening direction, the ECU 39 calculates an amount of change in the control duty (control amount) that is needed for the EGR valve 42 to start an opening or closing operation in accordance with the change in the control amount. If the needed amount of change of control (amount of operation delay) is equal to or greater than a predetermined amount, the ECU 39 determines that the EGR valve 42 has an abnormality. This routine is executed by a periodical interrupt at a predetermined time interval.

When the EGR valve diagnostic routine is started, the ECU 39 calculates an amount of change ΔQ in the fuel injection amount Q per unit time and an amount of change ΔNE in the engine revolution speed NE per unit time in step 101. The fuel injection amount Q is updated at predetermined time intervals in a separate routine. The engine revolution speed NE is determined on the basis of a detection value from the rotational speed sensor 56. In step 101, the ECU 39 reads the latest values Qn, NEn and the previous values Qn-1, Nen-1 of the fuel injection amount Q and the engine revolution speed NE that are temporarily stored in the RAM 65, and determines the differences therebetween by subtraction.

Subsequently in step 102, the ECU 39 determines whether the engine condition based on the fuel injection amount Q (engine load) and the engine revolution speed NE are steady. More specifically, the ECU 39 determines whether absolute values of the changes ΔQ, ΔNE calculated in step 101 are less than corresponding predetermined values Qst, NEst, respectively (where Qst, NEst are positive values). If the determination in step 102 is affirmative (steady engine condition), operation proceeds to step 103. If the determination is negative (non-steady engine condition), operation proceeds to step 118.

In step 103, the ECU 39 determines whether the EGR valve 42 is being operated, that is, whether the exhaust gas recirculation is being performed. If it is determined that the EGR valve 42 is in operation, the ECU 39 proceeds to step 104. If it is determined that the EGR valve 42 is not in operation, the ECU 39 proceeds to step 118.

In step 118, the ECU 39 resets an EGR valve diagnostic flag XTEGR (described later) to "0". Subsequently, the ECU 39 proceeds to step 119.

In step 104, the ECU 39 determines whether the EGR valve diagnostic is being performed, on the basis of whether the EGR valve diagnostic flag XTEGR is "1". If the EGR valve diagnostic flag XTEGR is "1", the ECU 39 determines that the diagnostic is being performed, and proceeds to step 110 (Fig. 5). If the EGR valve diagnostic flag XTEGR has been reset to "0", the ECU 39 determines that the diagnostic is not being performed, and proceeds to step 105.

In step 105, the ECU 39 reads the latest value DEn and the previous DEn-1 of the EGR control duty DE that are calculated in the EGR valve drive control routine (Fig. 3) and temporarily stored in the RAM 65, and determines an amount of change ΔDE (DEn - DEn-1) in the EGR control duty DE.

Subsequently in step 106, the ECU 39 determines whether the absolute value of the change ΔDE in the EGR control duty DE calculated in step 105 is less than a predetermined DEst (positive value). If the absolute value of the change ΔDE is less than the predetermined value DEst, operation proceeds to step 107. If the absolute value of the change ΔDE is equal to or greater than the predetermined value DEst, operation proceeds to step 119.

In step 107, the ECU 39 increments a delay counter (count) CEGR.

Subsequently in step 108, the ECU 39 determines whether the delay count CEGR has exceeded a predetermined value CEGRst. If the delay count CEGR has exceeded the predetermined value CEGRst, operation proceeds to step 109. Conversely, if the delay count CEGR has not exceeded predetermined value CEGRst, the ECU 39 temporarily ends the present execution of the routine.

In short, in the process from step 101 through step 106, it is determined whether the engine 11 and the EGR valve 42 are in a condition suitable for the abnormality diagnostic of the EGR valve 42. If the determination is affirmative, the ECU 39 repeats the process of steps 101-108 (including the processing in step 107 and the determination in step 108) until the delay count CEGR exceeds the predetermined reference value CEGRst, that is, until a predetermined time elapses. Subsequently, the ECU 39 starts the EGR valve diagnostic in step 109, as described later.

Conversely, if the ECU 39 proceeds to step 119 after the negative determination in step 102, 103 or 106, the ECU 39 resets the delay counter to "0" in step 119, and then temporarily ends this routine.

In step 109, the ECU 39 starts the abnormality diagnostic of the EGR valve 42. More specifically, the ECU 39 sets the EGR valve diagnostic flag XTEGR to "1", and stores the present valve control duty DE as an initial value DE0, and the present actual EGR valve opening LEGR as an initial value LEGR0. Then the ECU 39 proceeds to step 110 (Fig. 5).

In step 110, the ECU 39 subtracts a predetermined value dDE (small positive value) from the present EGR control duty DE0 concerned with the electrification control of the EGR valve 42. Then the ECU 39 proceeds to step 111.

In step 111, the ECU 39 reads the present actual EGR valve opening LEGR, and calculates an amount of change ΔLEGR by subtracting the present actual EGR valve opening LEGR from the actual EGR valve opening initial value LEGR0 temporarily stored in step 109. Subsequently, the ECU 39 proceeds to step 112.

In step 112, the ECU 39 determines whether the absolute value of the change ΔLEGR is greater than the predetermined value LEGRst (positive value). If the absolute value of the change ΔLEGR is greater than the predetermined value LEGRst, the ECU 39 proceeds to step 113. If it is not greater than the predetermined value LEGRst, the ECU 39 temporarily ends this routine. That is, after temporarily exiting the routine, the ECU 39 repeats the process up to step 112 until the amount of change ΔLEGR exceeds the predetermined value LEGRst.

In step 113, the ECU 39 resets the EGR valve diagnostic flag XTEGR to "0". Subsequently, the ECU 39 proceeds to step 114.

In step 114, the ECU 39 subtracts the latest value of the EGR control duty DE calculated in step 110 during the present execution, from the initial value DE0 of the valve control duty. The absolute value of the difference (DE0 - DE) is stored into the RAM 65 as an amount of operation delay HDE at the start of driving the EGR valve. Subsequently, operation proceeds to step 115.

In step 115, the ECU 39 determines whether the amount of operation delay HDE calculated in step 114 is greater than a criterion HDETH (positive value). If the determination is affirmative, operation proceeds to step 116. If the determination is negative, operation proceeds to step 117.

In step 116, the ECU 39 determines that EGR valve 42 has an abnormality, and stores information regarding the determination into the RAM 65, and informs the driving person of the abnormality of the EGR valve 42 by, for example, turning on the alarm lamp 80. Subsequently, the ECU 39 temporarily ends this routine.

On the other hand, in step 117, the ECU 39 determines that the amount of operation delay HDE is sufficiently small and that the EGR valve 42 is normal, and then stores information regarding the determination into the RAM 65. At this moment, if the determination of valve abnormality has been stored in the RAM 65, the abnormality determination is cancelled and the alarm lamp 80 is turned off. Subsequently, the ECU 39 temporarily ends this routine.

Through the EGR valve diagnostic routine, the ECU 39 performs abnormality detection regarding the EGR valve 42. As is apparent from the foregoing description of the routine, the ECU 39 performs abnormality diagnostic with regard to the EGR valve 42 when the engine operating state and the opening of the EGR valve 42 are in the steady states based on pre-set conditions. During the abnormality diagnostic of the EGR valve 42, the amount of control-an amount of pressure applied to the EGR valve 42 to move the EGR valve 42 to a desired degree of opening (that is, the EGR control duty DE corresponding to the negative pressure and the atmospheric pressure introduced into the diaphragm valve) is gradually reduced by a small amount at a time, so as to cause the EGR valve 42 to start closing. During this operation, the change in the amount of control (|DE0 - DE|) needed before the EGR valve 42 starts closing, that is, before the shift from the steady state to the operating state, is calculated as the amount of operation delay HDE of the EGR valve 42. Then, the ECU 39 determines whether the amount of operation delay HDE is sufficiently small so that the EGR valve 42 can maintain fine and precise open/close control, by referring to the pre-set criterion HDETH. The determination is subsequently stored into the RAM 65, and the stored data about the determination is used for various control operations (for example, prevention or restart of EGR control) or the turning-on/off of the alarm lamp 80 in accordance with the OBD (on-board diagnostic) regulations.

In contrast with a related-art EGR control apparatus that simply detects a response delay between the control signal and the valve opening/closing operation, the flow control apparatus of this embodiment calculates an amount of control needed before the EGR valve 42 actually starts operating during a shift from the steady state to the transitional state and, when the amount of control exceeds the predetermined amount, determines that the EGR valve 42 has an abnormality. Therefore, if the amount of control increases due to deterioration of the operating characteristic of the EGR valve 42, fouling of the interior thereof, and the like, the apparatus of the embodiment detects an abnormality directly related to the fine and precise characteristic and the responsiveness of the open/close control of the EGR valve 42.

In the embodiment wherein the EGR valve abnormality diagnostic is performed in the manner as describe above, an abnormality in the EGR valve 42 is detected on the basis of an increase in the amount of control needed when the state of the EGR valve 42 shifts from the steady state to the transitional state. Therefore, it becomes possible to more accurately diagnose an abnormality in the valve operation for which the open/close control is linearly performed, including a standstill at a given opening.

Furthermore, the amount of control is obtained by gradually increasing the amount of control to drive the EGR valve 42, which is in the steady state, in the opening or closing direction, and then detecting an amount of control at the time of start of the opening or closing operation of the EGR valve 42. Therefore, the amount of control needed for the shift from the steady state to the operating state can be obtained as an accurate value.

Furthermore, in the EGR valve diagnostic routine in the first embodiment, the EGR control duty DE for the EGR valve 42 is reduced by a small amount at a time in step 110. That is, the operation of reducing the negative pressure in the EGR valve 42 so that the EGR valve 42 closes, is provided. However, it is also possible to calculate the amount of operation delay HDE by increasing the EGR control duty DE by a small amount at a time.

A second embodiment of the invention will be described, mainly focusing on the features that distinguish the second embodiment from the first embodiment.

As in the first embodiment, the second embodiment is related to a diesel engine system and its EGR control apparatus having substantially the same construction as illustrated in Figs. 1 and 2.

When the EGR valve as shown in Fig. 1, that is, the diaphragm-type EGR valve as illustrated in Fig. 16, is opened or closed, the static friction that occurs on a sliding contact portion together with the up-down movements of the valve body provided in the valve and the operation delay caused by a response delay or the like before the bend of the diaphragm has an effect on the valve body, appear as hysteresis in the relationship between the amount of control (for example, negative pressure) provided for the valve and the actual valve open/close starting operation (amount of operation).

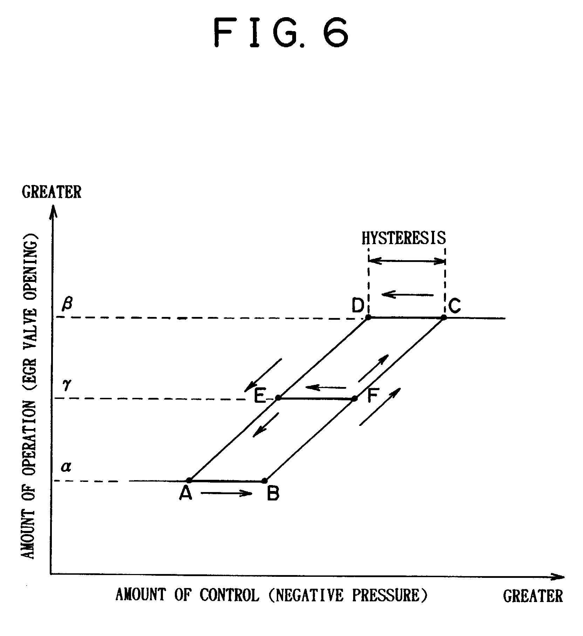

Fig. 6 indicates an example of the manner of change in the opening of a diaphragm-type EGR valve where the valve is operated in the opening or closing direction by changing the negative pressure inside the valve.

As indicated in Fig. 6, if the magnitude of negative pressure on the valve is gradually increased starting with the completely closed state (α) of the valve, the valve starts to operate (starts to open) at point B where the magnitude of negative pressure becomes sufficiently large after passing point A. The valve becomes fully open (β) at point C, as the magnitude of negative pressure is further increased. If the magnitude of negative pressure on the valve is gradually reduced starting with the fully open state (β) of the valve, the valve starts to operate (starts to open) at point D where the magnitude of negative pressure is sufficiently reduced after point C. That is, a hysteresis corresponding to a distance AB or CD occurs. Furthermore, it has been confirmed that if the magnitude of negative pressure is changed to change the valve opening from an intermediate opening such as an opening γ, there occurs a hysteresis substantially equal to that occurring in the case of the changing of the valve opening (the changing of the negative pressure) from the opening α or β (the completely closed or fully open state). That is, if the magnitude of negative pressure is increased to increase the valve opening from the opening γ, the valve starts to operate in the opening direction at point F (where the magnitude of negative pressure is sufficiently increased after passing point E). If the magnitude of negative pressure is reduced to reduce the valve opening from the opening γ, the valve starts to operate in the closing direction at point E (where the magnitude of negative pressure is sufficiently reduced after passing point F).

Therefore, the EGR control apparatus of the second embodiment detects a hysteresis between the closing operation and the opening operation of the EGR valve 42, in addition to a deviation between the amount of control and the amount of operation of the EGR valve 42. More specifically, programs executed by the ECU 39 to control the EGR valve 42 include an EGR driving routine for driving and controlling the EGR in accordance with the operating condition of the engine 11 and an EGR valve diagnostic routine for abnormality diagnostic of the EGR valve 42.

Of the two controls, the program for the drive-control of the EGR valve 42 will first be described with reference to a flowchart. By this program, the ECU 39 determines a control duty DE for the drive-control of the EGR valve 42, and sets and resets a historical flag XEGRop (that records a history as to whether the operation of the EGR valve 42 is an opening operation or a closing operation) which is used in the EGR valve diagnostic routine described later.

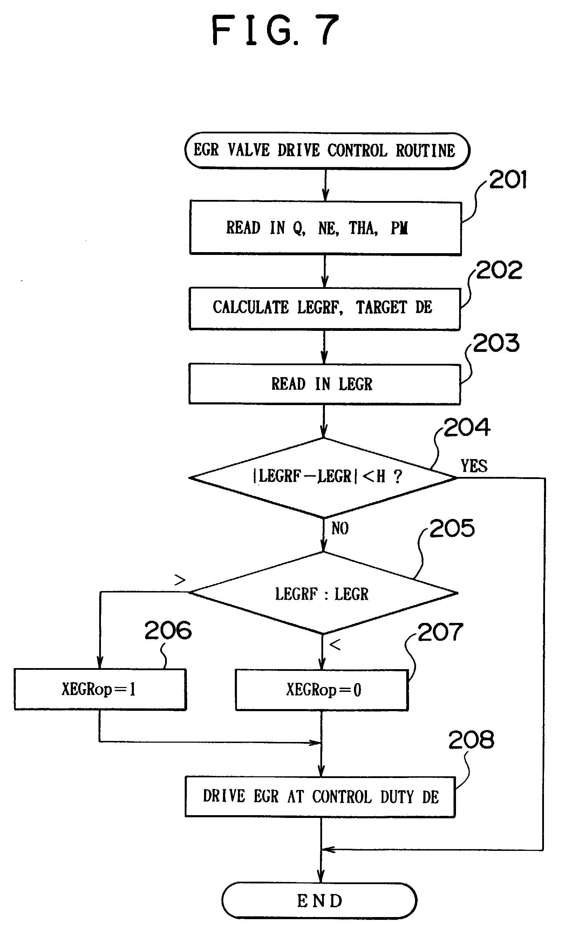

The flowchart of Fig. 7 illustrates, as an example, the program process of the EGR valve drive control routine. This routine is executed by the ECU 39 as a periodical interrupt at a predetermined time interval.

When this routine is started, the ECU 39, in step 201, reads an engine revolution speed NE, an intake temperature THA and an intake pressure PM calculated on the basis of detection values provided by the rotational speed sensor 56, the intake temperature sensor 15b and the intake pressure sensor 59, respectively, and also reads a latest value of the fuel injection amount Q that is updated every predetermined time in a separate routine.

Subsequently in step 202, the ECU 39 calculates a target EGR valve opening LEGRF on the basis of the engine revolution speed NE and the fuel injection amount Q inputted in step 201, with reference to a predetermined map (not shown). Furthermore, the ECU 39 calculates a control duty, as a target DE, corresponding to the target EGR valve opening LEGRF. Subsequently, ECU 39 proceeds to step 203.

In step 203, the ECU 39 reads an actual EGR valve opening LEGR based on a detection value from the lift sensor 45b. Then the ECU 39 proceeds to step 204.

In step 204, the ECU 39 determines whether the deviation of the actual EGR valve opening LEGR from the target EGR valve opening LEGRF, that is, |LEGRF - LEGR|, is less than a predetermined value H (where H is a positive value). If the determination is negative, operation proceeds to step 205. If the determination is affirmative, the ECU 39 temporarily ends this routine. More specifically, if the determination in step 204 is affirmative, it is considered that the target opening LEGRF of the EGR valve 42 calculated with reference to the operating condition substantially equals the present actual EGR valve opening LEGR, so that the opening of the EGR valve 42 will not be changed.

In step 205, the ECU 39 determines which one of the target EGR valve opening LEGRF and the actual EGR valve opening LEGR is greater. If LEGRF > LEGR, operation proceeds to step 206. If LEGRF < LEGR, operation proceeds to step 207.

In step 206, the ECU 39 sets the historical flag XEGRop to "1". The ECU 39 then proceeds to step 208. On the other hand, in step 207, the ECU 39 resets the historical flag XEGRop to "0". The ECU 39 then proceeds to step 208. In short, in the process of steps 205 through 207, it is determined whether the changing of the opening of the EGR valve 42 to be presently performed is an opening operation or a closing operation, and the result of determination is stored as a history.

In step 208, the ECU 39 performs the drive-control of the EGR valve 42 in accordance with the control duty (target DE) calculated in step 202. Subsequently, the ECU 39 temporarily ends this routine.

The program for EGR valve abnormality diagnostic will be described with reference to a flowchart.

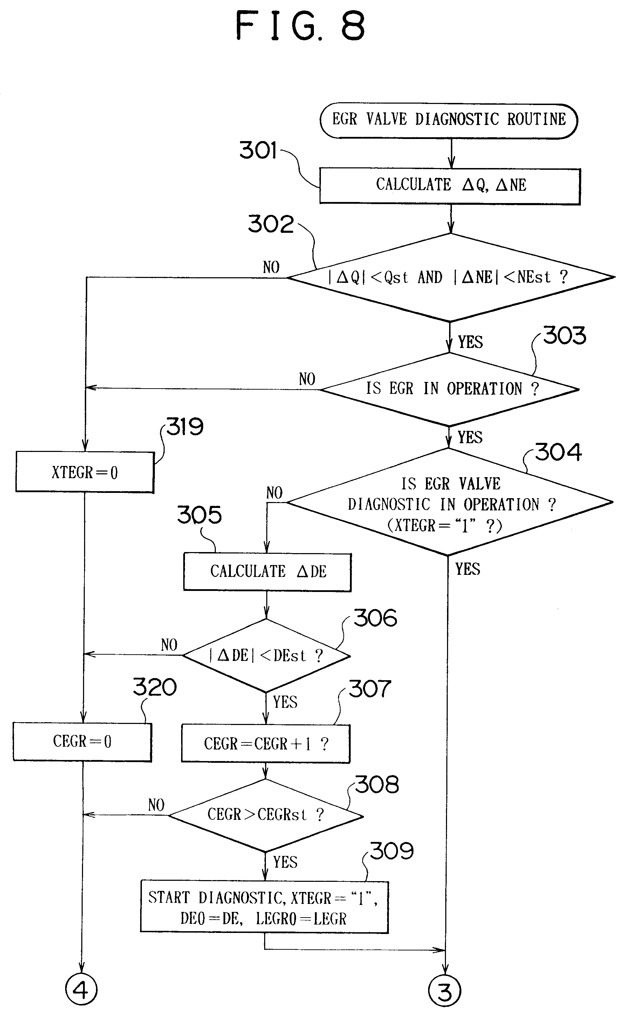

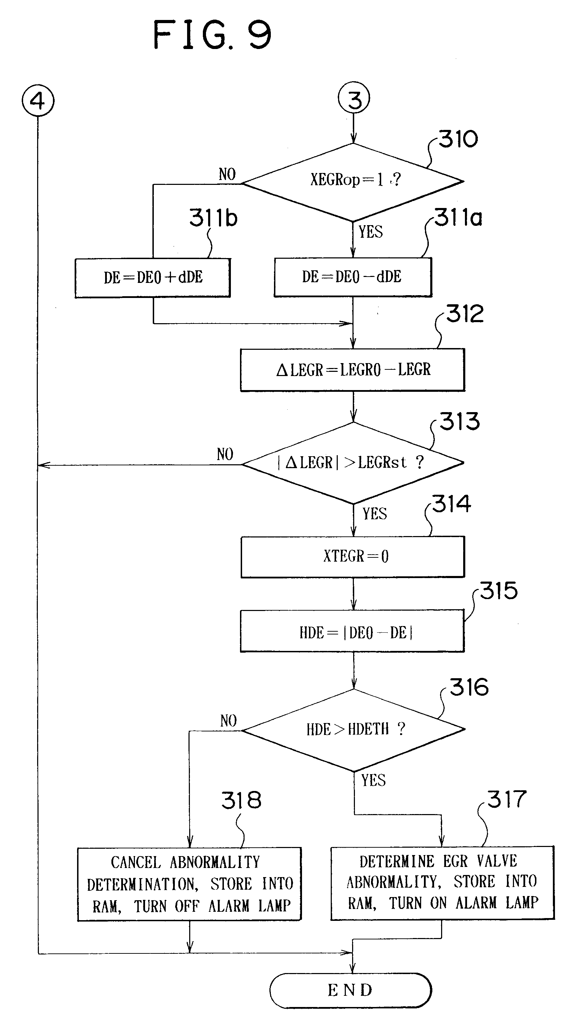

The flowchart of Figs. 8 and 9 illustrate an EGR valve diagnostic routine executed by the ECU 39. In this routine, it is determined that the EGR valve 42 has an abnormality, if the hysteresis between the start of opening and the start of closing of the EGR valve 42 increases to or above a predetermined value. As described above, the hysteresis occurs in the opening/closing operation of the EGR valve 42 when the control duty (amount of control) is changed to increase or decrease the opening of the EGR valve 42. This routine is executed by a periodical interrupt at a predetermined time interval as in the EGR valve drive control routine.

When the EGR valve diagnostic routine is started, the ECU 39 calculates an amount of change ΔQ in the fuel injection amount Q per unit time and an amount of change ΔNE in the engine revolution speed NE per unit time in step 301. The fuel injection amount Q is updated at predetermined time intervals in a separate routine. The engine revolution speed NE is determined on the basis of a detection value from the rotational speed sensor 56. In step 301, the ECU 39 reads the latest values Qn, NEn and the previous values Qn-1, Nen-1 of the fuel injection amount Q and the engine revolution speed NE E that are temporarily stored in the RAM 65, and determines the differences therebetween by subtraction.

Subsequently in step 302, the ECU 39 determines whether the engine condition based on the fuel injection amount Q (engine load) and the engine revolution speed NE are steady. More specifically, the ECU 39 determines whether absolute values of the changes ΔQ, ΔNE calculated in step 301 are less than corresponding predetermined values Qst, NEst, respectively (where Qst, NEst are positive values). If the determination in step 302 is affirmative (steady engine condition), operation proceeds to step 303. If the determination is negative (non-steady engine condition), operation proceeds to step 319.

In step 303, the ECU 39 determines whether the EGR valve 42 is being operated, that is, whether the exhaust gas recirculation is being performed. If it is determined that the EGR valve 42 is in operation, the ECU 39 proceeds to step 304. If it is determined that the EGR valve 42 is not in operation, the ECU 39 proceeds to step 319. In step 319, the ECU 39 resets the EGR valve diagnostic flag XTEGR to "0". Subsequently, the ECU 39 proceeds to step 320.

In step 304, the ECU 39 determines whether the EGR valve diagnostic is being performed, on the basis of whether the EGR valve diagnostic flag XTEGR is "1". If the EGR valve diagnostic flag XTEGR is "1", the ECU 39 determines that the diagnostic is being performed, and proceeds to step 310 (Fig. 9). If the EGR valve diagnostic flag XTEGR has been reset to "0", the ECU 39 determines that the diagnostic is not being performed, and proceeds to step 305.

In step 305, the ECU 39 reads the latest value DEn and the previous DEn-1 of the EGR control duty DE that are calculated in the EGR valve drive control routine (Fig. 7) and temporarily stored in the RAM 65, and determines an amount of change ΔDE (DEn - DEn-1) in the EGR control duty DE.

Subsequently in step 306, the ECU 39 determines whether the absolute value of the change ΔDE in the EGR control duty DE calculated in step 305 is less than a predetermined DEst (positive value). If the absolute value of the change ΔDE is less than the predetermined value DEst, operation proceeds to step 307. If the absolute value of the change ΔDE is equal to or greater than the predetermined value DEst, operation proceeds to step 320.

In step 307, the ECU 39 increments a delay counter (count) CEGR.

Subsequently in step 308, the ECU 39 determines whether the delay count CEGR has exceeded a predetermined value CEGRst. If the delay count CEGR has exceeded the predetermined value CEGRst, operation proceeds to step 309. Conversely, if the delay count CEGR has not exceeded predetermined value CEGRst, the ECU 39 temporarily ends this routine. In short, in the process from step 301 through step 306, it is determined whether the engine 11 and the EGR valve 42 are in a condition suitable for the abnormality diagnostic of the EGR valve 42. If the determination is affirmative, the ECU 39 temporarily exits the routine after executing steps 307, 308, so that the ECU 39 repeats the process of steps 301-308 a predetermined number of times (for a predetermined period of time) before the ECU 39 starts the EGR valve diagnostic in step 310, as described later. Conversely, if the ECU 39 proceeds to step 320 after the negative determination in step 302, 303 or 306, the ECU 39 resets the delay counter to "0" in step 320, and then temporarily ends this routine.

In step 309, the ECU 39 starts the abnormality diagnostic of the EGR valve 42. More specifically, the ECU 39 sets the EGR valve diagnostic flag XTEGR to "1", and stores the present valve control duty DE as an initial value DEO, and the present actual EGR valve opening LEGR as an initial value LEGRO. Then the ECU 39 proceeds to step 310 (Fig. 9).

In step 310, the ECU 39 determines whether the historical flag XEGRop, described above in conjunction with the EGR valve drive control routine, is presently "1". If it is determined that the historical flag XEGRop is "1", that is, if it is determined that the previous operation of the EGR valve 42 was an opening operation, the ECU 39 proceeds to step 311a. Conversely, if it is determined that the historical flag XEGRop is "0", that is, if it is determined that the previous operation of the EGR valve 42 was a closing operation, the ECU 39 proceeds to step 311b.

In step 311a, the ECU 39 subtracts a predetermined value dDE (small positive value) from the present EGR control duty DE0 concerned with the electrification control of the EGR valve 42. Then, the ECU 39 proceeds to step 312. On the other hand, in step 311b, the ECU 39 adds the predetermined value dDE to the present control duty DE0. Then the ECU 39 proceeds to step 312.

In step 312, the ECU 39 reads the present actual EGR valve opening LEGR, and calculates an amount of change ΔLEGR by subtracting the present actual EGR valve opening LEGR from the actual EGR valve opening initial value LEGR0 temporarily stored in step 309. Subsequently, the ECU 39 proceeds to step 313. In step 313, the ECU 39 determines whether the absolute value of the change ΔLEGR is greater than the predetermined value LEGRst (positive value). If the absolute value of the change ΔLEGR is greater than the predetermined value LEGRst, the ECU 39 proceeds to step 314. If it is not greater than the predetermined value LEGRst, the ECU 39 temporarily ends this routine. That is, after temporarily exiting the routine, the ECU 39 repeats the process up to step 313 until the amount of change ΔLEGR exceeds the predetermined value LEGRst.

In step 314, the ECU 39 resets the EGR valve diagnostic flag XTEGR to "0". Subsequently, the ECU 39 proceeds to step 315.

In step 315, the ECU 39 subtracts the latest value of the EGR control duty DE calculated in step 311a or 311b during the present execution, from the initial value DE0 of the valve control duty. The absolute value of the difference (DE0 - DE) is stored into the RAM 65 as an amount of hysteresis HDE that includes an amount of operation delay at the start of driving the EGR valve. Subsequently, operation proceeds to step 316.

In step 316, the ECU 39 determines whether the amount of hysteresis HDE calculated in step 315 is greater than a criterion HDETH (positive value). If the determination is affirmative, operation proceeds to step 317. If the determination is negative, operation proceeds to step 318.

In step 317, the ECU 39 determines that EGR valve 42 has an abnormality, and stores information regarding the determination into the RAM 65, and informs a driving person of the abnormality of the EGR valve 42 by, for example, turning on the alarm lamp 80. Subsequently, the ECU 39 temporarily ends this routine.

On the other hand, in step 318, the ECU 39 determines that the amount of hysteresis HDE is sufficiently small and that the EGR valve 42 is normal, and then stores information regarding the determination into the RAM 65. At this moment, if the determination of valve abnormality has been stored in the RAM 65, the abnormality determination is cancelled and the alarm lamp 80 is turned off. Subsequently, the ECU 39 temporarily ends this routine.

Thus, the ECU 39 controls the flow of exhaust gas returning from the exhaust gas passage into the intake air passage, by performing the duty-control of the opening of the EGR valve 42 through the EGR valve drive control routine and the EGR valve diagnostic routine. As is apparent from the foregoing description of these routines, the ECU 39 adjusts the recirculating flow of exhaust gas by operating the EGR valve 42 in the opening or closing direction in accordance with the engine operating condition based on the fuel injection amount Q, the engine revolution speed NE and the like. If the engine operating state and the opening of the EGR valve 42 are in steady states based on pre-set conditions, the ECU 39 executes the abnormality diagnostic of the EGR valve 42. For the diagnostic of the EGR valve 42, the ECU 39 first provides an amount of control (that is, the control duty DE corresponding to the negative pressure and the atmospheric pressure introduced into the diaphragm valve, according to this embodiment) such that the EGR valve 42 performs an operation opposite to the previous operation, on the basis of the history of the opening/closing operation stored before the present opening/closing control of the EGR valve 42 is executed. During this program operation, the change in the amount of control (ΔDE or |DE0 - DE|) needed for the shift of the EGR valve 42 from the steady state to the operating state, is calculated as the amount of hysteresis HDE between the start of opening and the start of closing of the EGR valve 42. Then, the ECU 39 determines whether the amount of hysteresis HDE is sufficiently small so as to presently maintain suitable valve open/close control. If the amount of hysteresis HDE exceeds a maximum allowable value for suitable valve open/close control, ECU 39 determines that the EGR valve 42 has an abnormality, and turns on the alarm lamp 80 and performs other appropriate operations, for example, inhibits the EGR control.

In contrast with a related-art EGR control apparatus that simply detects a response delay between the control signal and the valve opening/closing operation, the exhaust gas recirculation control apparatus of this embodiment detects a more essential operation abnormality of the EGR valve 42 by detecting an open-close hysteresis of the EGR valve 42 that is an intrinsic mechanical characteristic thereof, and detecting an increase (abnormality) in the hysteresis.

This embodiment, which performs the EGR valve control as described above, is able to more accurately detect a reduction in the fine and precise characteristic and the responsiveness in the EGR valve drive control, by determining whether the EGR valve 42 has an abnormality, on the basis of an increase in the amount of hysteresis HDE between the start of opening and the start of closing of the EGR valve 42.

Furthermore, the embodiment is able to accurately and quickly calculate the amount of hysteresis HDE between the start of opening and the start of closing of the EGR valve 42, by gradually increasing the amount of control for driving the EGR valve 42 from the steady state and detecting an amount of control at the time of the start of an opening/closing operation thereof.

A third embodiment of the invention will be described, mainly focusing on the features that distinguish the third embodiment from the first embodiment.

As in the first embodiment, the third embodiment is related to a diesel engine system and its EGR control apparatus having substantially the same construction as illustrated in Figs. 1 and 2.

Control programs for the EGR valve 42 in the EGR control apparatus of this embodiment include an EGR driving routine for the drive-control of the EGR valve 42 and an EGR valve diagnostic routine for the abnormality diagnostic of the EGR valve 42.

Of the two controls, the program for the drive-control of the EGR valve 42 will first be described with reference to a flowchart. By this program, the ECU 39 determines a control duty DE for the drive-control of the EGR valve 42, and sets and resets a historical flag XEGRop (that records a history as to whether the operation of the EGR valve 42 is an opening operation or a closing operation) which is used in the EGR valve diagnostic routine described later. Furthermore, the ECU 39 reads values set in EGR abnormality flags XEGR1, XEGR2 that are set and reset in the EGR valve diagnostic routine, and then corrects or inhibits the drive-control of the EGR valve 42 on the basis of the set values of the two flags.

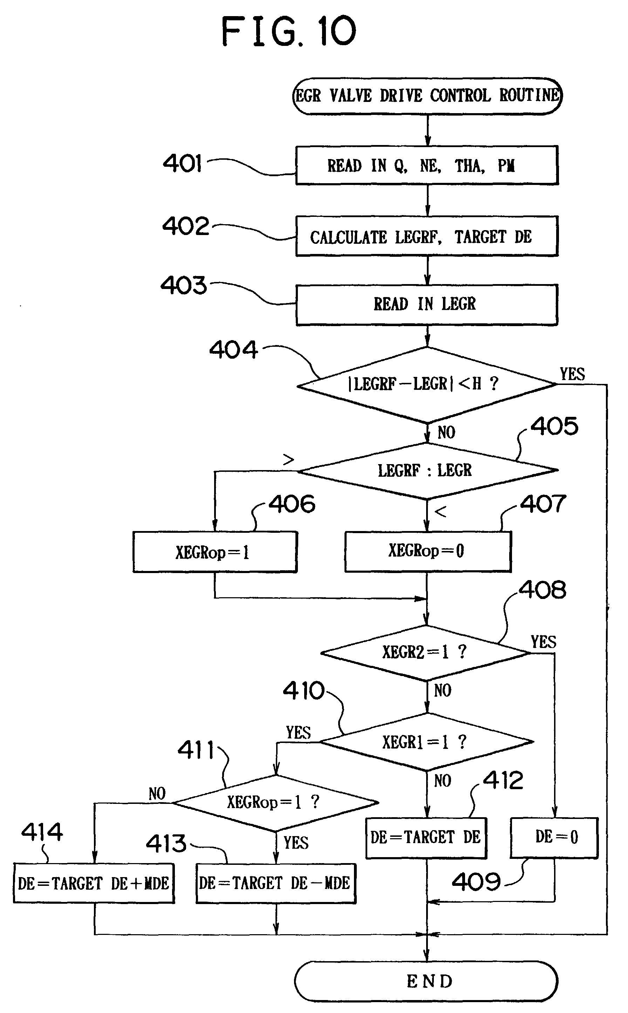

The flowchart of Fig. 10 illustrates, as an example, the program process of the EGR valve drive control routine. This routine is executed by the ECU 39 by a periodical interrupt at a predetermined time interval.

When this routine is started, the ECU 39, in step 401, reads an engine revolution speed NE, an intake temperature THA and an intake pressure PM calculated on the basis of detection values provided by the rotational speed sensor 56, the intake temperature sensor 15b and the intake pressure sensor 59, respectively, and also reads a latest value of the fuel injection amount Q that is updated every predetermined time in a separate routine.

Subsequently in step 402, the ECU 39 calculates a target EGR valve opening LEGRF on the basis of the engine revolution speed NE and the fuel injection amount Q inputted in step 401, with reference to a predetermined map (not shown). Furthermore, the ECU 39 calculates a control duty, as a target DE, corresponding to the target EGR valve opening LEGRF. Subsequently, ECU 39 proceeds to step 403.

In step 403, the ECU 39 reads an actual EGR valve opening LEGR based on a detection value from the lift sensor 45b. Then, the ECU 39 proceeds to step 404.

In step 404, the ECU 39 determines whether the deviation of the actual EGR valve opening LEGR from the target EGR valve opening LEGRF, that is, |LEGRF - LEGR|, is less than a predetermined value H (where H is a positive value). If the determination is negative, operation proceeds to step 405. If the determination is affirmative, the ECU 39 temporarily ends this routine. More specifically, if the determination in step 404 is affirmative, it is considered that the target opening LEGRF of the EGR valve 42 calculated with reference to the operating condition substantially equals the present actual EGR valve opening LEGR, so that the opening of the EGR valve 42 will not be changed.

In step 405, the ECU 39 determines which one of the target EGR valve opening LEGRF and the actual EGR valve opening LEGR is greater. If LEGRF > LEGR, operation proceeds to step 406. If LEGRF < LEGR, operation proceeds to step 407.

In step 406, the ECU 39 sets the historical flag XEGRop to "1". The ECU 39 then proceeds to step 408. On the other hand, in step 407, the ECU 39 resets the historical flag XEGRop to "0". The ECU 39 then proceeds to step 408. In short, in the process of steps 405 through 407, it is determined whether the changing of the opening of the EGR valve 42 to be presently performed is an opening operation or a closing operation, and the result of determination is stored as a history.

In step 408, the ECU 39 determines whether an EGR valve abnormality flag XEGR2 that is set or reset in the EGR valve diagnostic routine described later is presently "1". If the flag XEGR2 is "1", the ECU 39 proceeds to step 409. If the flag XEGR2 is "0", the ECU 39 proceeds to step 410.

In step 409, the ECU 39 sets the duty of the EGR valve 42 to 0%, that is, sets the EGR valve 42 to the completely closed state. The ECU 39 then temporarily ends this routine.

On the other hand, in step 410, the ECU 39 determines whether an EGR valve abnormality flag XEGR1 that is set and reset in the EGR valve diagnostic routine described later is presently "1". If the EGR valve abnormality flag XEGR1 is "1", the ECU 39 proceeds to step 411. If the EGR valve abnormality flag XEGR1 is "0", the ECU 39 proceeds to step 412.

In the process of steps 408 and 410, the ECU 39 determines a degree or extent of the abnormality of the EGR valve 42 on the basis of result of diagnostic performed in the EGR valve diagnostic routine.

That is, the ECU 39 selects one of the following determinations:
(1) The EGR valve 42 has an abnormality within a range where the abnormality cannot be corrected through control (XEGR2 = "1"). Then, the EGR control is stopped.
(2) The EGR valve 42 has an abnormality within a range where the abnormality can be corrected through control (XEGR2 = "0" and XEGR1 = "1"). Then, the presently calculated amount of control (target DE) is corrected.
(3) The EGR valve 42 is normal (XEGR2 = "0" and XEGR1 = "0"). Then, the amount of control (target DE) is not corrected.

In step 412, the ECU 39 sets the EGR control duty DE calculated in step 402, as the control DE to be used in the drive-control of the EGR valve 42. After executing the drive-control of the EGR valve 42, the ECU 39 temporarily ends this routine.

On the other hand, in step 411, the ECU 39 determines whether the historical flag XEGRop set in step 406 or reset in step 407 in accordance with the determination in step 405 in the present execution of the routine is "1". If the historical flag XEGRop is "1", the ECU 39 proceeds to step 413. If the historical flag XEGRop is "0", the ECU 39 proceeds to step 414. That is, in accordance with the determination as to whether the changing of opening of the EGR valve 42 to be presently performed is an opening operation or a closing operation, the ECU 39 determines whether to add a correction amount (duty) MDE to or subtract it from the target DE.

In step 413, the ECU 39 subtracts the pre-set correction amount MDE (positive value) from the target DE calculated in step 402. Using the result of the subtraction as a control duty DE, the ECU 39 executes the drive-control of the EGR valve 42. Subsequently, the ECU 39 temporarily ends this routine.

On the other hand, in step 414, the ECU 39 adds the correction amount MDE to the target DE calculated in step 402. Using the result of the addition as a control duty DE, the ECU 39 executes the drive-control of the EGR valve 42. Subsequently, the ECU 39 temporarily ends this routine.

The program for performing the EGR valve abnormality diagnostic will be described with reference to a flowchart.

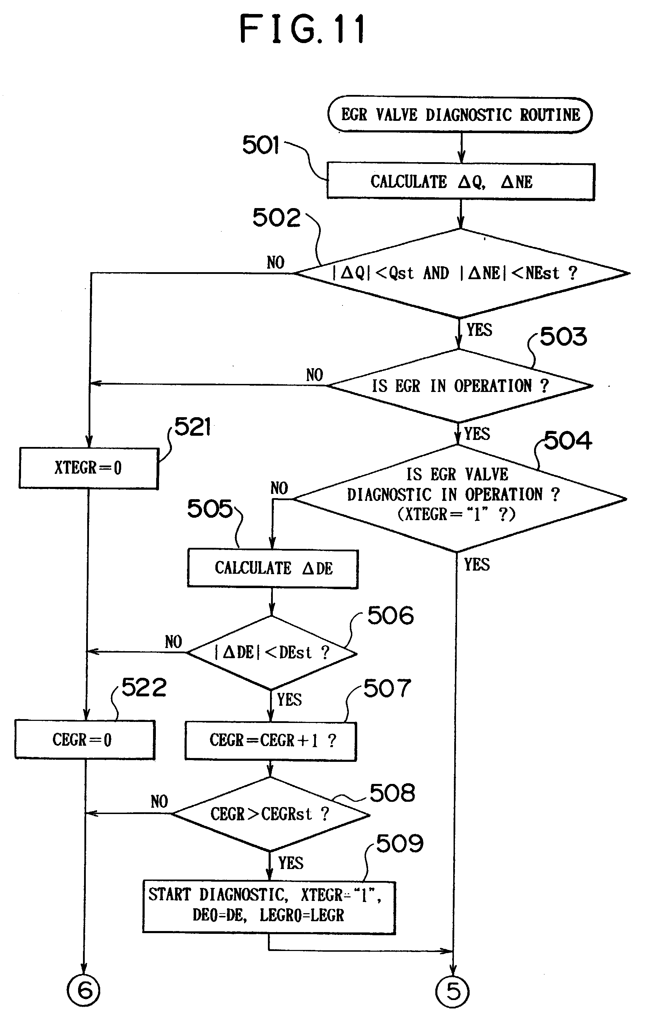

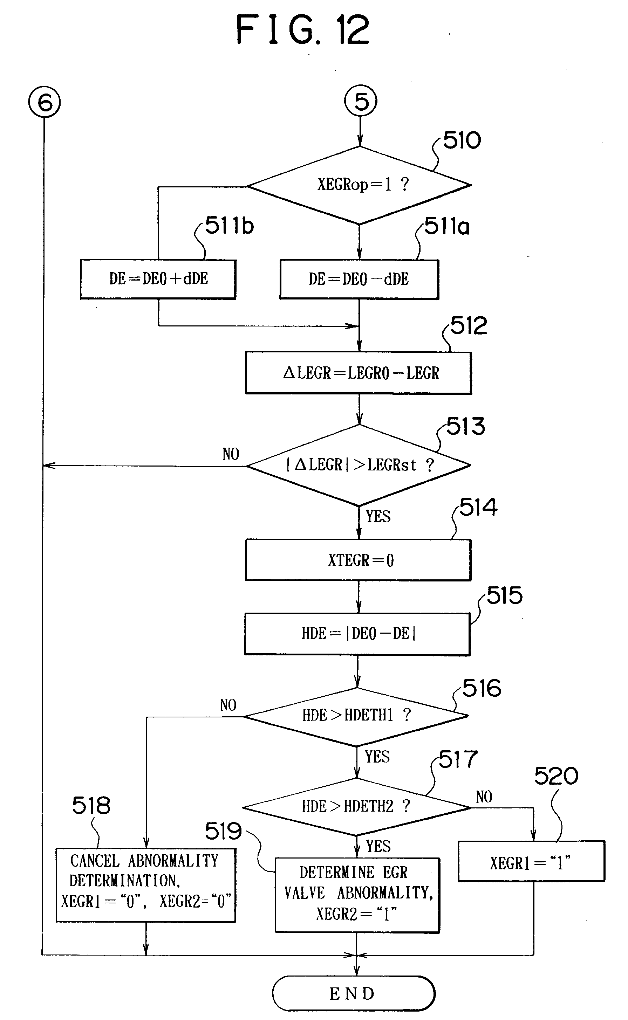

The flowchart of Figs. 11 and 12 illustrates an EGR valve diagnostic routine executed by the ECU 39. In this routine, it is determined that the EGR valve 42 has an abnormality, if the hysteresis between the start of opening and the start of closing of the EGR valve 42 increases to or above a predetermined value. Furthermore, in this routine, the ECU 39 sets and resets the EGR valve abnormality flag XEGR2 and the EGR valve abnormality flag XEGR1, which are used in the EGR valve drive control routine. This routine is executed by a periodical interrupt at a predetermined time interval as in the EGR valve drive control routine.

When the EGR valve diagnostic routine is started, the ECU 39 calculates an amount of change ΔQ in the fuel injection amount Q per unit time and an amount of change ΔNE in the engine revolution speed NE per unit time in step 501. The fuel injection amount Q is updated at predetermined time intervals in a separate routine, and the engine revolution speed NE is determined on the basis of a detection value from the rotational speed sensor 56, as described above. In step 501, the ECU 39 reads the latest values Qn, NEn and the previous values Qn-1, Nen-1 of the fuel injection amount Q and the engine revolution speed NE that are temporarily stored in the RAM 65, and determines the differences therebetween by subtraction.

Subsequently in step 502, the ECU 39 determines whether the engine condition based on the fuel injection amount Q (engine load) and the engine revolution speed NE are steady. More specifically, the ECU 39 determines whether absolute values of the changes ΔQ, ΔNE calculated in step 501 are less than corresponding predetermined values Qst, NEst, respectively (where Qst, NEst are positive values). If the determination in step 502 is affirmative (steady engine condition), operation proceeds to step 503. If the determination is negative (non-steady engine condition), operation proceeds to step 521.

In step 503, the ECU 39 determines whether the EGR valve 42 is being operated, that is, whether the exhaust gas recirculation is being performed. If it is determined that the EGR valve 42 is in operation, the ECU 39 proceeds to step 504. If it is determined that the EGR valve 42 is not in operation, the ECU 39 proceeds to step 521. In step 521, the ECU 39 resets the EGR valve diagnostic flag XTEGR to "0". Subsequently, the ECU 39 proceeds to step 522.

In step 504, the ECU 39 determines whether the EGR valve diagnostic is being performed, on the basis of whether the EGR valve diagnostic flag XTEGR is "1". If the EGR valve diagnostic flag XTEGR is "1", the ECU 39 determines that the diagnostic is being performed, and proceeds to step 510 (Fig. 12). If the EGR valve diagnostic flag XTEGR has been reset to "0", the ECU 39 determines that the diagnostic is not being performed, and proceeds to step 505.

In step 505, the ECU 39 reads the latest value DEn and the previous DEn-1 of the EGR control duty DE that are calculated in the EGR valve drive control routine and temporarily stored in the RAM 65, and determines an amount of change ΔDE (DEn - DEn-1) in the EGR control duty DE.

Subsequently in step 506, the ECU 39 determines whether the absolute value of the change ΔDE in the EGR control duty DE calculated in step 505 is less than a predetermined DEst (positive value). If the absolute value of the change ΔDE is less than the predetermined value DEst, operation proceeds to step 507. If the absolute value of the change ΔDE is equal to or greater than the predetermined value DEst, operation proceeds to step 520.

In step 507, the ECU 39 increments a delay counter (count) CEGR.

Subsequently in step 508, the ECU 39 determines whether the delay count CEGR has exceeded a predetermined value CEGRst. If the delay count CEGR has exceeded the predetermined value CEGRst, operation proceeds to step 509. Conversely, if the delay count CEGR has not exceeded predetermined value CEGRst, the ECU 39 temporarily ends this routine.

That is, in the process from step 501 through step 506, it is determined whether the engine 11 and the EGR valve 42 are in a condition suitable for the abnormality diagnostic of the EGR valve 42. If the determination is affirmative, the ECU 39 temporarily exits the routine after executing steps 507, 58, so that the ECU 39 repeats the process of steps 501-508 a predetermined number of times (for a predetermined period of time) before the ECU 39 starts the EGR valve diagnostic in step 510, as described later.

Conversely, if the ECU 39 proceeds to step 522 after the negative determination in step 502, 503 or 506, the ECU 39 resets the delay counter to "0" in step 522, and then temporarily ends this routine.

In step 509, the ECU 39 starts the abnormality diagnostic of the EGR valve 42. More specifically, the ECU 39 sets the EGR valve diagnostic flag XTEGR to "1", and stores the present valve control duty DE as an initial value DE0, and the present actual EGR valve opening LEGR as an initial value LEGR0. Then the ECU 39 proceeds to step 510 (Fig. 12).

In step 510, the ECU 39 determines whether the historical flag XEGRop, described above in conjunction with the EGR valve drive control routine, is presently "1". If it is determined that the historical flag XEGRop is "1", that is, if it is determined that the previous operation of the EGR valve 42 was an opening operation, the ECU 39 proceeds to step 511a. Conversely, if it is determined that the historical flag XEGRop is "0", that is, if it is determined that the previous operation of the EGR valve 42 was a closing operation, the ECU 39 proceeds to step 511b.

In step 511a, the ECU 39 subtracts a predetermined value dDE (small positive value) from the present EGR control duty DEO concerned with the electrification control of the EGR valve 42. Then, the ECU 39 proceeds to step 512. On the other hand, in step 511b, the ECU 39 adds the predetermined value dDE to the present control duty DEO. Then, the ECU 39 proceeds to step 512.

In step 512, the ECU 39 reads the present actual EGR valve opening LEGR, and calculates an amount of change ΔLEGR by subtracting the present actual EGR valve opening LEGR from the actual EGR valve opening initial value LEGRO temporarily stored in step 509. Subsequently, the ECU 39 proceeds to step 513. In step 513, the ECU 39 determines whether the absolute value of the change ΔLEGR is greater than the predetermined value LEGRst (positive value). If the absolute value of the change ΔLEGR is greater than the predetermined value LEGRst, the ECU 39 proceeds to step 514. if it is not greater than the predetermined value LEGRst, the ECU 39 temporarily ends this routine. That is, after temporarily exiting the routine, the ECU 39 repeats the process up to step 513 until the amount of change ΔLEGR exceeds the predetermined value LEGRst.

In step 514, the ECU 39 resets the EGR valve diagnostic flag XTEGR to "0". Subsequently, the ECU 39 proceeds to step 515.

In step 515, the ECU 39 subtracts the latest value of the EGR control duty DE calculated in step 511a or 511b during the present execution, from the initial value DE0 of the valve control duty. The absolute value of the difference (DE0 - DE) is stored into the RAM 65 as an amount of hysteresis HDE that includes an amount of operation delay at the start of driving the EGR valve. Subsequently, operation proceeds to step 516.

In step 516, the ECU 39 determines whether the amount of hysteresis HDE calculated in step 515 is greater than a first criterion HDETH1 (positive value). If the determination is affirmative, operation proceeds to step 517. If the determination is negative, operation proceeds to step 518. In step 517, the ECU 39 determines whether the amount of hysteresis HDE is greater than a second criterion HDETH2 (where HDETH2 > HDETH1). If the determination is affirmative, operation proceeds to step 519. If the determination is negative, operation proceeds to step 520.

In step 519, the ECU 39 determines that the EGR valve 42 has an abnormality, and sets the EGR valve abnormality flag XEGR2 to "1", and informs a driving person of the operation abnormality of the EGR valve 42 by, for example, turning on the alarm lamp 80. Subsequently, the ECU 39 temporarily ends this routine.

On the other hand, in step 520, the ECU 39 determines, based on an increase in the amount of hysteresis HDE, that an abnormality has occurred in the driving of the EGR valve 42 but within a range where the abnormality can be corrected through control. The ECU 39 sets the EGR valve abnormality flag XEGR1 to "1". Subsequently, the ECU 39 temporarily ends this routine.

In step 518, which follows the negative determination in step 516, the ECU 39 determines that the EGR valve 42 is normal, based on a sufficiently small amount of hysteresis HDE. After resetting the EGR valve abnormality flag XEGR2 and the EGR valve abnormality flag XEGR1 to "0", the ECU 39 temporarily ends this routine.

Thus, the ECU 39 controls the flow of exhaust gas returning from the exhaust gas passage into the intake air passage, by performing the duty-control of the opening of the EGR valve 42 through the EGR valve drive control routine and the EGR valve diagnostic routine. As is apparent from the foregoing description of these routines, the ECU 39 adjusts the recirculating flow of exhaust gas by performing the open/close control of the EGR valve 42 in accordance with the engine operating condition based on the fuel injection amount Q, the engine revolution speed NE and the like. If the engine operating state and the opening of the EGR valve 42 are in steady states based on pre-set conditions, the ECU 39 executes the abnormality diagnostic of the EGR valve 42. For the diagnostic of the EGR valve 42, the ECU 39 first provides an amount of control (that is, the control duty DE corresponding to the negative pressure and the atmospheric pressure introduced into the diaphragm valve, according to this embodiment) such that the EGR valve 42 performs an operation opposite to the previous operation, on the basis of the history of the opening/closing operation stored before the present opening/closing control of the EGR valve 42 is executed. During this program operation, the change in the amount of control (ΔDE or |DE0 - DE|) needed for the shift of the EGR valve 42 from the steady state to the operating state, is calculated as the amount of hysteresis HDE between the start of opening and the start of closing of the EGR valve 42. Then, the ECU 39 determines whether the amount of hysteresis HDE is within an allowable range where the present valve open/close control can be suitably maintained or within a range where the amount of control needs to be corrected, or whether it is preferable to stop the exhaust gas recirculation, with reference to the pre-set criteria HDETH1, HDETH2. The result of determination is stored into the RAM 65, and reflected in the ordinary open/close control of the EGR valve 42 executed by the EGR valve drive control routine.

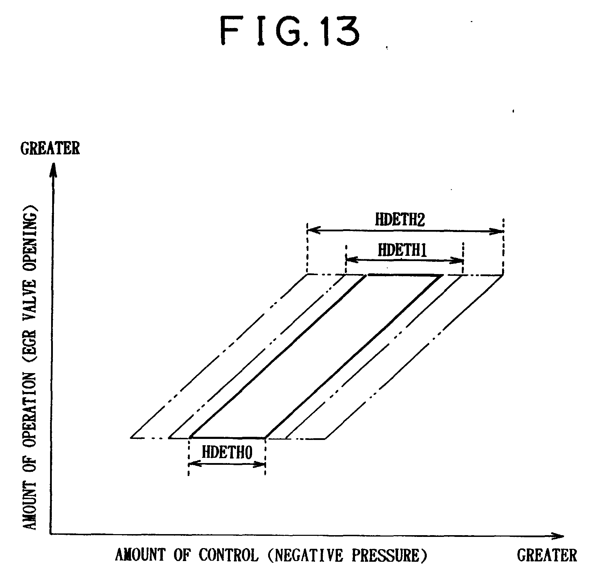

Fig. 13 indicates, as an example, the abnormality determination range where it is determined, with reference to the criteria HDETH1, HDETH2, that the EGR valve 42 has an abnormality related to an increase in the amount of hysteresis HDE between the start of opening and the start of closing of the EGR valve 42, on the basis of the relationship between the control duty DE by the ECU 39 and the actual valve opening LEGR. As indicated in Fig. 13, as the amount of hysteresis increases from the amount of hysteresis HDETH0 based on the intrinsic mechanical characteristic of the normal EGR valve 42, beyond the criterion HDETH1 and then HDETH2, the change in the amount of control needed for the EGR valve 42 to start opening or closing from a steady state thereof gradually increases.

In contrast with a known EGR control apparatus that simply detects a response delay between the control signal and the valve opening/closing operation, the exhaust gas recirculation control apparatus of this embodiment detects a more essential operation abnormality of the EGR valve 42, that is, an abnormality directly related to the fine and precise characteristic and the responsiveness in the EGR valve open/close control, by detecting an open-close hysteresis of the EGR valve 42 that is an intrinsic mechanical characteristic thereof, and detecting an increase (abnormality) in the hysteresis.

Furthermore, by providing a plurality of determination ranges in accordance with the extent of increase in the amount of hysteresis, the EGR control apparatus of this embodiment is able to select a control operation optimal to a detected operation abnormality of the EGR valve 42. Therefore, it becomes possible to perform control more precisely corresponding to the degree or extent of a valve abnormality.

Further, the EGR control apparatus of this embodiment detects as an abnormality an increase in the hysteresis resulting from a mechanical characteristic of a diaphragm-type valve or the like. If the extent of the increase in the hysteresis is relatively small, the apparatus corrects the amount of control with the correction value MDE. Therefore, it becomes possible to improve the fine and precise characteristic and the responsiveness of the EGR valve open/close control.

This embodiment, which performs the EGR valve control as described above, is able to accurately detect a reduction in the fine and precise characteristic and the responsiveness in the EGR valve drive control, by determining whether the EGR valve 42 has an abnormality, on the basis of an increase in the amount of hysteresis HDE between the start of opening and the start of closing of the EGR valve 42.

Furthermore, the embodiment is able to accurately and quickly calculate the amount of hysteresis HDE between the start of opening and the start of closing of the EGR valve 42, by gradually increasing the amount of control for driving the EGR valve 42 from the steady state and detecting an amount of control at the time of the start of an opening/closing operation of the EGR valve 42.

Further, by performing an appropriate processing or operation based on an increase in the calculated hysteresis between the start of opening and the start of closing of the EGR valve 42, such as correction in accordance with the extent of the increase in the hysteresis, or the like, the embodiment is able to maintain fine and precise control even if an abnormality occurs in the opening/closing driving of the EGR valve 42. Moreover, the embodiment is able to select an optimal countermeasure in accordance with circumstances that include the degree or extent of an abnormality; for example, the embodiment stops the exhaust gas recirculation if necessary.

In addition, the embodiment is made capable of fine and precise control by solving the problem of occurrence of the open-close hysteresis that an inexpensive open/close control valve, such as a diaphragm-type valves, has as its mechanical characteristic, and the problem of increase in the hysteresis with the use of the valve. Therefore, the apparatus of the embodiment is favorable in terms of costs.

In the third embodiment, the three determination patterns, that is, non-abnormality, abnormality within a correction-possible range, and stop of the EGR control, are provided in accordance with increases in the amount of hysteresis HDE between the start of opening and the start of closing of the EGR valve 42. However, it is also possible to divide the determination pattern of abnormality within the correction-possible range into a plurality of determination patterns for which correspondingly different correction controls are performed.

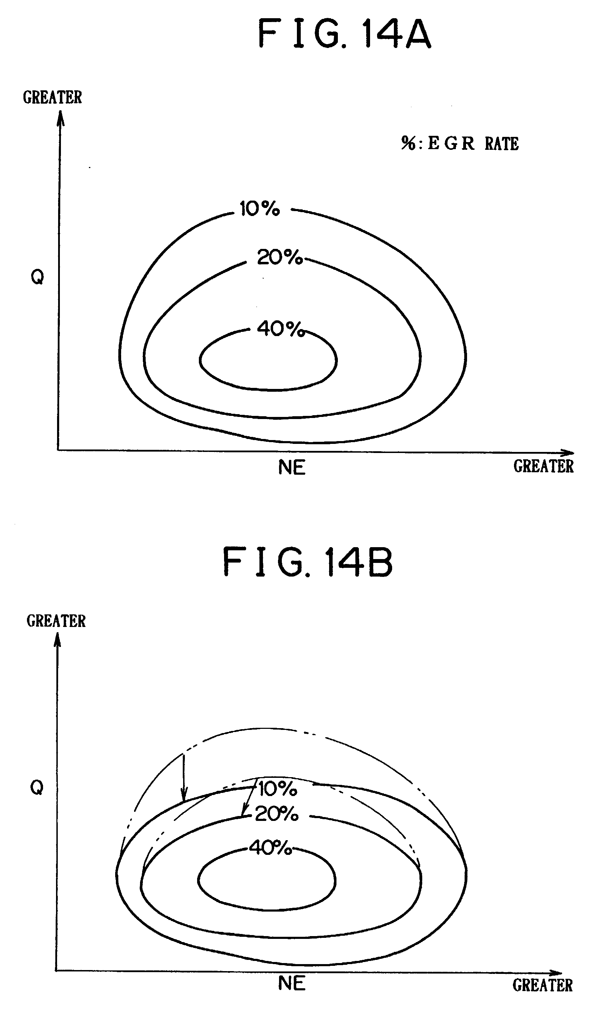

The third embodiment uses a specific correction amount MDE to correct the control duty DE of the EGR valve 42 if it is determined that the EGR valve 42 has an abnormality within a range where the abnormality can be corrected. However, if there occurs an abnormality within a correction-possible range, it is also possible to perform correction, using a specific correction amount, with respect to an operation region wherein the abnormality of the EGR valve 42 has a considerable adverse effect. In an example of such modification, when the EGR valve 42 is normal, the open/close control of the EGR valve 42 is performed in accordance with a map, as indicated in Fig. 14A, in which target EGR rate regions based on operating conditions, such as the engine revolution speed NE, the fuel injection amount Q and the like, are set. If an abnormality of the EGR valve 42 is detected, the open/close control of the EGR valve 42 is performed in accordance with another map, as indicated in Fig. 14B, in which at least portions of the target EGR rate regions are changed from those set in the map used when the EGR valve 42 is normal. With this control design, if there is an increase in the hysteresis between the start of opening and the start of closing of the EGR valve 42, local correction can easily be performed with respect to a region wherein the abnormality has a remarkable effect in relation to the engine operating condition (for example, the changed portions of the EGR rate regions indicated in Fig. 14B).

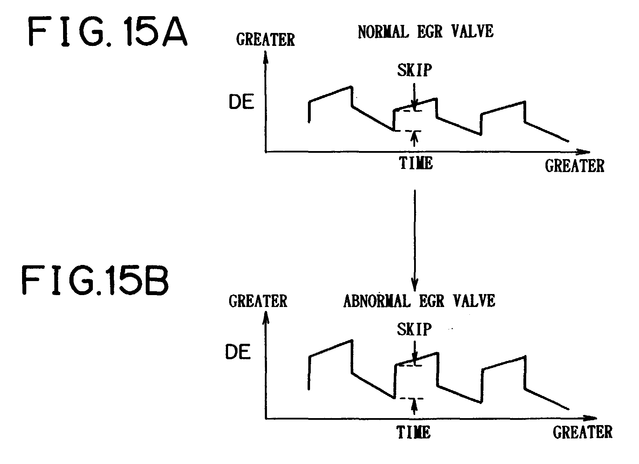

In the third embodiment, the opening of the EGR valve 42 is corrected when an abnormality of the EGR valve 42 within a correction-possible range is detected, by adding a correction amount to or subtracting it from a basic amount of the target EGR valve opening calculated on the basis of the present operating condition. However, for a case where the opening of the EGR valve 42 is set by performing a so-called feedback control such that the actual value of the valve opening is converged to (caused to follow) a target value thereof calculated on the basis of the operating condition of the engine 11 while the difference between the target value and the actual value of the valve opening is calculated, there is a known control method in which a predetermined skip amount determined considering a response delay that occurs, at the time of start of opening or closing operation of the EGR valve 42, in response to a change in the engine operating condition, is added to the basic amount of a feedback factor (that is, correction duty DE) as indicated in Fig. 15A. That is, this control method sets an amount of operation that is greater than a basic target value (the value of the integral term in a control calculation), taking the response delay into account. The third embodiment may also be applied to such a feedback system. In this application, the advantages substantially the same as the aforementioned advantages of the third embodiment can be achieved by designing a control program such that if it is determined that the hysteresis between the start of opening and the start of closing of the EGR valve 42 has increased due to its deterioration or the like, the skip amount is increased by a predetermined amount in a manner, for example, as indicated in Fig. 15B.

In the foregoing embodiments, the opening of the EGR valve 42 is calculated on the basis of a detection value provided by the lift sensor 45b. However, it is also possible to indirectly calculate the opening of the EGR valve 42 (the EGR rate), for example, on the basis of a change in the intake pressure PM detected by the intake pressure sensor 59.

Although in the foregoing embodiments, the flow control valve system of the invention is applied to the vehicular diesel engine EGR control apparatuses, the invention may be applied to not only EGR control valve systems but also various other control apparatuses, for example, a control apparatus for a variable nozzle turbo, a variable intake valve, a throttle valve or the like that performs linear control using a negative pressure actuator, and the like. Moreover, the application of the invention is not limited to control apparatuses utilizing negative pressure. The invention may be applied to any control apparatus that linearly controls the opening of a flow control valve and that is affected by an operation delay of the valve at the time of a shift from a steady state to a recirculating state of the valve.

## Claims

1. A flow control valve system comprising:
a flow control valve (42) provided in a fluid passage (41);
control means (39) for controlling an opening of the flow control valve (42) so that a flow of fluid through the fluid passage (41) becomes a target value;
control amount detection means (39) for, while the opening of the flow control valve (42) is in a steady state, detecting an amount of control needed for the flow control valve (42) to actually operate after output of an operation instruction from the control means (39) to the flow control valve (42); and characterized by
diagnostic means (39) for determining whether the flow control valve (42) has an abnormality, by comparing the amount of control detected by the control amount detection means (39) with a predetermined reference value.

2. A flow control valve system according to claim 1,
wherein the flow control valve (42) has a hysteresis between an opening operation and a closing operation thereof, and
wherein the control amount detection means (39) detects the amount of control needed until the flow control valve (4 2) actually operates, as a value that involves the hysteresis of the flow control valve (42) as a factor.

3. A flow control valve system according to claim 1 or 2, characterized by further comprising correction means for, if it is determined by the diagnostic means (39) that the flow control valve (42) has an abnormality, correcting the amount of control provided by the control means (39).

4. A flow control valve system according to claim 1, wherein the amount of control includes a control duty.

5. A method for controlling a flow control valve,
comprising the steps of:
providing a flow control valve (42) in a fluid passage (41);
controlling an opening of the flow control valve (42) so that a flow of fluid through the fluid passage (41) becomes a target value;
detecting, while the opening of the flow control valve (42) is in a steady state, an amount of control needed for the flow control valve (42) to actually operate after receiving an operation instruction; and characterized by
determining whether the flow control valve (42) has an abnormality, by comparing the amount of control detected by the control amount detection means (39) with a predetermined reference value.

6. A method according to claim 5, wherein in the detecting step, the control amount needed until the flow control valve (42) actually operates is detected as a value that involves the hysteresis between an opening operation and a closing operation of the flow control valve (42) as a factor.

7. A method according to claim 5 or 6, characterized by further comprising the step of, if it is determined that the flow control valve (42) has an abnormality, correcting the amount of control provided in the controlling step.

8. A method according to claim 5, wherein the amount of control detected in the detecting step including a control duty.
